# EUROPEAN PATENT SPECIFICATION

(11) **EP 2 244 980 B1**
(45) Date of publication and mention of the grant of the patent: **28.09.2011**
(21) Application number: 08871063.7
(22) Date of filing: 29.12.2008
(51) Int. Cl.: C01G 23/02, C22B 34/12

(54) **THE PRODUCTION OF TITANIUM TRIFLUORIDE**
HERSTELLUNG VON TITANTRIFLUORID
PRODUCTION DE TRIFLUORURE DE TITANE

(30) Priority: 14.01.2008 ZA 200800404
(43) Date of publication of application: 03.11.2010
(73) Proprietor: Peruke (Proprietary) Limited, 2001 Johannesburg (ZA)
(72) Inventor: PRETORIUS, Gerard, 0157 Centurion (ZA)
(74) Representative: Grünecker, Kinkeldey, Stockmair & Schwanhäusser Anwaltssozietät
(86) International application number: PCT/IB2008/055559
(87) International publication number: WO 2009/090513

(56) References cited:
- EP-A- 0 319 857
- WO-A-2006/079887
- H. SIBUN ET AL: "Titanium, Titnaium alloys and titanium compounds" ULMANN ENCICLOPEDIA, 2005, pages 1-30, XP002530708
- BUKOVEC P ET AL: "Theremal Analysis of Complex Fluorides" JOURNAL OF THERMAL ANALYSIS AND CALORIMETRY, KLUWER, DORDRECHT, NL, vol. 36, no. 5, 1 January 1990 (1990-01-01), pages 1751-1760, XP009068101 ISSN: 1388-6150

## Description

THIS INVENTION relates to the production of titanium trifluoride (TiF₃).

As described in WO 2006/079887 A2, TiF3 is a preferred intermediate to produce Ti metal after reduction with reducing agents like Al, Mg, Na or Ca.

The present invention provides an efficient and inexpensive process for the production of titanium trifluoride.

The Applicant is aware of WO 2006/079887 A2 in which TiF₃ is produced from titanium-containing materials such as ilmenite by the reduction of (NH₄)₂TiF₆. However, this process requires the reduction of Ti(IV) with aluminium and is, accordingly, a more expensive process than that of the present invention. The method of the present invention provides an inexpensive process for reducing Ti(IV) to Ti(III) .

In acid conditions, transition metals M and alloys thereof, in which M may be manganese, iron, cobalt, nickel or zinc can reduce Ti(IV) to Ti(III). Further, because these metals have a lower affinity for fluoride ions than titanium, it is possible to form NH₄TiF₄ or other fluoride complexes without interference from M. However, the M²⁺ ion has to be stabilized to prevent it from oxidation and co-precipitation. The Applicant has found that oxidation and co-precipitation of the metal can be prevented by the formation of an ammonium double salt (NH₄)₂MCl₄ by adding NH₄Cl (about 4,4 mol per mol of M²⁺) or (NH₄)₂SO₄ (about 2,2 mol per mol of M²⁺) to the reduction solution.

The Applicant has found that a buffering solution results with the addition of NH₄OH or NH₄F which stabilizes the pH of the reduction solution at between 4-5. It is postulated that under these conditions, NH₄OH or NH₄F forms an unusual complex, NH₄TiF₄.NH₄OH or NH₄TiF₄.NH₄F which precipitates from the solution. This complex is stable even when dried. The M²⁺ can then be washed from this complex to leave a clean precursor which can be decomposed to produce TiF₃.

According to a first aspect of the invention, there is provided a method for the production of titanium trifluoride from a titanium-containing material, the method including the steps of
producing a fluoride solution of Ti(IV) from the titanium-containing material,
reducing the Ti(IV) in the solution with a transition metal or an alloy of the transition metal, in which the transition metal is selected from manganese, iron, cobalt, nickel and zinc to produce a solution containing Ti(III),
adding an ammonium containing salt and either ammonia or ammonium fluoride or a mixture thereof to the solution containing Ti(III) to produce a precipitate, and
pyrolising the precipitate to produce titanium trifluoride.

The above metals all have redox potentials which favour the reduction of Ti(IV) to Ti(III) and produce M²⁺ under the conditions of the reduction. They also form the ammonium double salt (NH₄)₂MCl₄ on addition of NH₄Cl or (NH₄)₂SO₄ in the ratios as set out above.

Producing the solution of Ti(IV) from the titanium-containing material may be by digesting the material in an aqueous solution of HF, The ammonium containing salt may be ammonium chloride. Without being bound by theory, the applicant believes that the precipitate is either NH₄TiF₄.NH₄OH or NH₄TiF₄.NH₄F respectively.

The titanium-containing material may be selected from titanium oxides, hydroxides and sulphates, including materials such as rutile, anatase, brookite, pseudo-brookite, and leucoxene, which are all TiO₂ containing materials, and titaniferous slags. Titaniferous slag is a TiO₂-containing material produced largely from the smelting of ilmenite. Ilmenite (FeTiO₃) may also be used in the method of the invention but would require larger amounts of HF and would produce larger amounts of by products.

The method may include reducing the Ti(IV) with iron. The iron may be in the form of iron plates, lumps, powder, iron-containing alloys and the like.

The concentration of the aqueous HF solution may be between about 5 - - 60 %, preferably between about 10 - 30 % and, more preferably between about 15 and 25%.

The invention extends to titanium trifluoride prepared by a method as herein described.

The invention extends further to titanium metal prepared from titanium trifluoride produced by a method as herein described.

The invention extends further to the complex salt NH₄TiF₄.NH₄OH.

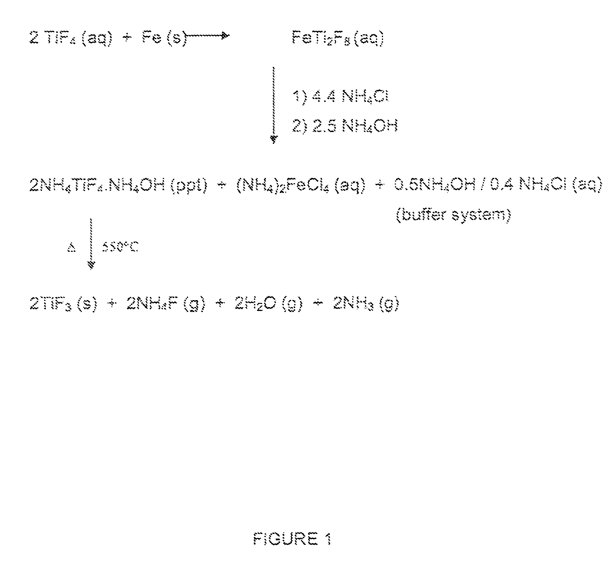

The invention is now described, by way of example, with reference to the following Example and Figure 1 which shows the reduction of TiF₄ to TiF₃.

### Example 1: Production of TiF₃ using iron as the reducing agent

In a 5ℓ polypropylene beaker, HF (2400g, 40%) was diluted with tap water (2100g). Anatase pulp (1.25kg, approximately 50% Ti) was slowly added to the diluted acid with stirring. The dissolution reaction was exothermic and the temperature rose to 60-70°C. After about one hour, the excess pulp was filtered from the solution.

TiO(OH)₂ (s) + 4HF (aq) → TiF₄ (aq) + 2H₂O

The aqueous TiF₄ leachate was then standardized. An excess of (NH₄)₂CO₃ was slowly added to a sample of the leachate (75g) in an alumina crucible (250 ml) until no further white precipitate formed. The precipitate was heated to dryness on a hot plate and the crucible was placed in a furnace at 1000°C. After decomposition (at which point no further fuming took place) the yield of TiO₂, after cooling was 10.2g, indicating that 587,5g of leachate is required to produce 1 mol of TiO₂ (79.9g).

The leachate (2940g, equal to 5mol TiO₂), was diluted with tap water (980g) in a 5ℓ polypropylene beaker. While slowly stirring, two mild steel plates were lowered into the solution. The total surface submersed in the solution was approximately 3000cm². Although 40% of the reaction had completed within the first two hours, the reaction was left overnight (18h) to complete. The reduction of Ti(IV) with iron does not proceed further than Ti(III). The mild steel plates were lifted from the dark green solution, dried and weighed. It was found that 147,6g (2,643 mol) iron had dissolved.

To stabilize the Fe(II) in solution, 4.4 mol NH₄Cl (10% excess) was added with stirring (2.643 x 4.4 x 53.5g / mol = 622g NH₄Cl) for each mol of iron to form the double salt (NH₄)₂FeCl₄. After 30 minutes, when all the NH₄Cl had dissolved, aqueous ammonia (NH₄OH) was slowly added to the solution. It was found that 2.5mol NH₄OH (496 ml, 25% solution) added to 1 mol Fe(II) under these conditions resulted in a high yield of a violet precipitate of (what is believed to be) NH₄TiF₄.NH₄OH without co-precipitation of Fe(II) [(2.643 x 2.5 x 75mℓ / mol NH₄OH (25%)]. After 30 minutes the precipitate was filtered and the filter cake was washed with 0.01 N acetic acid solution until the filtrate was clear. The precipitate was then dried at 70°C to produce a violet cake (846.6 g). A portion of the cake (50 g) was decomposed under N₂ in an alumina crucible with a graphite lid for 12 hours at 550°C. A strong smell of ammonia was noted and after cooling, a dark brown powder (29.6g ) was produced which was shown by XRD and XRF analysis to be TiF₃.

The mass loss of 40.8% implied that 846.6g of the violet precursor yielded 501.2 g TiF₃. With a molar mass of 104.9 g, this was equal to 4.78mol TiF₃, obtained from 5mol TiF₄ leachate (95.6% efficiency).

The buffer system (excess NH₄Cl and NH₄OH) improved the stability of pH 4 - 5 during the NH₄OH addition and improved the yield without co-precipitation of the Fe(II).

The mass of TiF₃ (104.9g/mol) obtained by decomposition of (what is believed to be) NH₄TiF₄.NH₄OH, (176.9g / mol) is theoretically 59.3%. The yield of TiF₃ obtained was 59.2%, indicating an almost quantitive conversion.

### Example 2: Production of TiF₃ using Manganese, Cobalt. Nickel or Zinc.

Reductions were carried out on the leachate of Example 1 using, respectively, manganese, cobalt, nickel and zinc as the reducing agent to produce TiF₃.

In the case of reduction with iron, the off gases formed during the decomposition of the precipitate were scrubbed with slaked lime to form CaF₂ and NH₄OH. The (NH₄)₂FeCl₄ stream is the same as that described in WO 2006/079887 A2, but produces approximately 50% less Fe per unit of Ti.

The NH₄Cl did not need to be purified or crystallized, it was added as a saturated solution and water was added for the NH₄Cl to dissolve.

Particularly, in the case of iron, the advantages of the method of the present invention over those of the process described in WO 2006/079887 A2 are:
i) crude anatase can be used,
ii) Fe is a much cheaper reducing agent than Al powder,
iii) there is a 35% saving in HF cost (4 mol HF per Ti instead of 6 mol),
iv) the amount of CaF₂ and Fe which has to be removed in the recycling loops is approximately 50% less than that of the WO 2006/079887 A2 process,
v) NH₄Cl can be recycled as a saturated solution instead of as a dry powder, and
vi) 25% less AlF₃ needs to be sublimed in the final product.

The process described in WO 2006/079887 A2 produces a mixture of TiF₃ (75-80 wt%) and AlF₃ (25-20 wt%) from (NH₄)₂TiF₆ via Al reduction. Like titanium, aluminium also has a high affinity for fluoride. This results in the co-precipitation of (NH₄)₃AlF₆ with NH₄TiF₄ during reduction when Al competes against Ti for fluoride ions. When this mixture of precursors is decomposed it results in a TiF₃ - AlF₃ mixture. The method of the present invention produces a pure TiF₃ product using Fe as a reducing agent.

## Claims

1. A method for the production of titanium trifluoride from a titanium-containing material, the method including the steps of
producing a fluoride solution of Ti(IV) from the titanium-containing material,
reducing the Ti(IV) in the solution with a transition metal or an alloy of the transition metal, in which the transition metal is elected from manganese, iron, cobalt, nickel and zinc to produce a solution containing Ti(III),
adding an ammonium containing salt and either ammonia or ammonium fluoride or a mixture thereof to the solution containing Ti(III) to produce a precipitate, and
pyrolising the precipitate to produce titanium trifluoride.

2. A method as claimed in claim 1, in which the solution of Ti(IV) is produced from the titanium-containing material by digesting the titanium-containing material in an aqueous solution of HF.

3. A method as claimed in claim 1 or claim 2, in which the ammonium containing salt is ammonium chloride.

4. A method as claimed in any one of the preceding claims, in which the titanium-containing material is selected from titanium oxides, hydroxides, sulphates and titaniferous slags.

5. A method as claimed in claim 4, in which the titanium-containing material is selected from rutile, anatase, brookite, pseudo-brookite, leucoxene and ilmenite

6. A method as claimed in any one of the preceding claims in which the Ti(IV) is reduced with iron or an iron containing alloy.

7. A method as claimed in any one of the preceding claims in which the concentration of the.aqueous HF solution is between about 5 and 60 %

8. A method as claimed in claim 7, in which the concentration of the aqueous HF solution is between about 10 and 30%.

9. A method as claimed in claim 8, in which the concentration of the aqueous HF solution is between about 15 25 %.

10. The complex salt NH₄TIF₄.NH₄.OH.

## Patentansprüche

1. Verfahren zur Herstellung von Titantrifluorid aus einem Titan enthaltenden Material, wobei das Verfahren die Schritte einschließt
das Herstellen einer Fluoridlösung von Ti(IV) aus dem Titan enthaltenden Material,
das Reduzieren des Ti(IV) in der Lösung mit einem Übergangsmetall oder einer Legierung des Übergangsmetalls, wobei das Übergangsmetall ausgewählt ist aus Mangan, Eisen, Cobalt, Nickel und Zink, um eine Ti(III) enthaltende Lösung herzustellen,
das Zugeben von einem Ammonium enthaltenden Salz und entweder Ammoniak oder Ammoniumfluorid oder einer Mischung davon zu der Ti(III) enthaltenden Lösung, um einen Niederschlag herzustellen, und
das Pyrolysieren des Niederschlags, um Titantrifluorid herzustellen.

2. Verfahren nach Anspruch 1, in welchem die Lösung von Ti(IV) aus dem Titan enthaltenden Material durch Digerieren des Titan enthaltenden Materials in einer wässrigen Lösung von HF hergestellt wird.

3. Verfahren nach Anspruch 1 oder Anspruch 2, in welchem das Ammonium enthaltende Salz Ammoniumchlorid ist.

4. Verfahren nach einem der vorangehenden Ansprüche, in welchem das Titan enthaltende Material ausgewählt ist aus Titanoxiden, -hydroxiden, -sulfaten und titanhaltigen Schlacken.

5. Verfahren nach Anspruch 4, in welchem das Titan enthaltende Material ausgewählt ist aus Rutil, Anatas, Brookit, Pseudo-Brookit, Leukoxen und limenit.

6. Verfahren nach einem der vorangehenden Ansprüche, in welchem das TI(IV) mit Eisen oder einer Eisen enthaltenden Legierung reduziert wird.

7. Verfahren nach einem der vorangehenden Ansprüche, in welchem die Konzentration der wässrigen HF-Lösung zwischen ungefähr 5 und 60 % beträgt.

8. Verfahren nach Anspruch 7, in welchem die Konzentration der wässrigen HF-Lösung zwischen ungefähr 10 und 30 % beträgt.

9. Verfahren nach Anspruch 8, in welchem die Konzentration der wässrigen HF-Lösung zwischen ungefähr 15 - 25 % beträgt.

10. Das Komplexsalz NH₄TiF₄ · NH₄OH.

## Revendications

1. Procédé pour la production de trifluorure de titane à partir d'un matériau contenant du titane, le procédé comprenant les étapes consistant à :
produire une solution de fluorure de Ti(IV) à partir du matériau contenant du titane,
réduire le Ti(IV) dans la solution avec un métal de transition ou un alliage du métal de transition, dans lequel le métal de transition est choisi parmi le manganèse, le fer, le cobalt, le nickel et le zinc pour produire une solution contenant du Ti(III),
ajouter un sel contenant un ammonium et soit de l'ammoniaque ou du fluorure d'ammonium ou un mélange de ces derniers à la solution contenant du Ti(III) pour produire un précipité, et
pyrolyser le précipité pour produire du trifluorure de titane.

2. Procédé selon la revendication 1, dans lequel la solution de Ti(IV) est produite à partir du matériau contenant du titane par digestion du matériau contenant du titane dans une solution aqueuse de HF.

3. Procédé selon la revendication 1 ou la revendication 2, dans lequel le sel contenant un ammonium est du chlorure d'ammonium.

4. Procédé selon l'une quelconque des revendications précédentes, dans lequel le matériau contenant du titane est choisi parmi des oxydes, des hydroxydes, des sulfates de titane et des scories titanifères.

5. Procédé selon la revendication 4, dans lequel le matériau contenant du titane est choisi parmi le rutile, l'anatase, la brookite, la pseudo-brookite, le leucoxène et l'ilménite.

6. Procédé selon l'une quelconque des revendications précédentes, dans lequel le Ti(IV) est réduit avec du fer ou un alliage contenant du fer.

7. Procédé selon l'une quelconque des revendications précédentes, dans lequel la concentration de la solution aqueuse de HF est comprise entre environ 5 % et 60 %.

8. Procédé selon la revendication 7, dans lequel la concentration de la solution aqueuse de HF est comprise entre environ 10 % et 30 %.

9. Procédé selon la revendication 8, dans lequel la concentration de la solution aqueuse de HF est comprise entre environ 15 % et 25 %.

10. Sel complexe NH₄TiF₄·N_{H}4OH.
